(19) Europäisches Patentamt
European Patent Office
Office européen des brevets

(11) **EP 3 614 322 A1**

(12) **EUROPEAN PATENT APPLICATION**

(43) Date of publication:
**26.02.2020 Bulletin 2020/09**

(51) Int Cl.:
***G06Q 10/08*** *(2012.01)*

(21) Application number: **19192654.2**

(22) Date of filing: **20.08.2019**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br>Designated Validation States:<br><b>KH MA MD TN</b><br><br>(30) Priority: <b>22.08.2018 US 201816109444</b></td><td>(71) Applicant: <b>BlackBerry Limited<br>Waterloo, Ontario N2K 0A7 (CA)</b><br><br>(72) Inventor: <b>AYOUB, Sameh<br>Waterloo, Ontario N2K 0A7 (CA)</b><br><br>(74) Representative: <b>MERH-IP Matias Erny Reichl<br>Hoffmann<br>Patentanwälte PartG mbB<br>Paul-Heyse-Strasse 29<br>80336 München (DE)</b></td></tr>
</table>

(54) **SYSTEM AND METHOD FOR SELECTING TRANSPORTATION ASSETS**

(57)    A system and method for selecting a transportation asset for use by a transportation asset management system includes receiving an order for a shipment, receiving, for each of a plurality of transportation assets, asset attribute data, determining, for each of the plurality of transportation assets, an asset rating value based on the asset attribute data, and based on the determine asset rating values, automatically selecting one of the plurality of transportation assets for use in transporting the shipment.

```
                    ┌──────────────────────────────────────┐ ⌐ 202
                    │   RECEIVE AN ORDER FOR A SHIPMENT      │
                    └──────────────────────────────────────┘
                                     │
                                     ▼
                    ┌──────────────────────────────────────┐ ⌐ 204
                    │  RECEIVE ASSET ATTRIBUTE DATA FOR EACH OF A │
                    │  PLURALITY OF TRANSPORATION ASSETS     │
                    └──────────────────────────────────────┘
                                     │
                                     ▼
                    ┌ ─ ─ ─ ─ ─ ─ ─ ─ ─ ─ ─ ─ ─ ─ ─ ─ ─ ─ ┐ ⌐ 206
                      DETERMINING WEIGHTING FACTORS ASSOCIATED WITH
                    │        THE ASSET ATTRIBUTE DATA        │
                    └ ─ ─ ─ ─ ─ ─ ─ ─ ─ ─ ─ ─ ─ ─ ─ ─ ─ ─ ┘
                                     │
                                     ▼
                    ┌──────────────────────────────────────┐ ⌐ 208
                    │  DETERMINE, FOR EACH OF THE PLURALITY OF │
                    │  TRANSPORATION ASSETS, AN ASSET RATING VALUE │
                    │     BASED ON THE ASSET ATTRIBUTE DATA  │
                    └──────────────────────────────────────┘
                                     │
                                     ▼
                    ┌──────────────────────────────────────┐ ⌐ 210
                    │  BASED ON THE DETERMINED ASSET RATING VALUES, │
                    │  AUTOMATICALLY SELECTING ONE OF THE PLURALITY OF │
                    │  TRANSPORATION ASSETS FOR USE IN TRANSPORTING │
                    │              THE SHIPMENT              │
                    └──────────────────────────────────────┘
                                     │
                                     ▼
                    ┌ ─ ─ ─ ─ ─ ─ ─ ─ ─ ─ ─ ─ ─ ─ ─ ─ ─ ─ ┐ ⌐ 212
                    │ TRANSMITTING THE SELECTED TRANSPORTATION ASSET │
                       TO A TRANSPORATION ASSET MANAGEMENT SYSTEM
                    └ ─ ─ ─ ─ ─ ─ ─ ─ ─ ─ ─ ─ ─ ─ ─ ─ ─ ─ ┘
```

FIG. 2

EP 3 614 322 A1

## Description

### FIELD

The present disclosure relates to selecting transportation assets.

### BACKGROUND

In the shipping industry, shipping yards may contain hundreds or thousands of transportation assets such as, for example, shipping containers, transport trailers, and rail cars. Shipping yards are often used to for storage, as a starting point for goods, or as a destination for goods, among other purposes. As used herein, a shipping yard may be a trailer yard, railyard or similar storage facility.

A yard dispatcher is responsible for choosing which transportation asset to use for a scheduled shipment. The yard dispatcher may favor certain assets, either consciously or unconsciously, causing some assets to be over-utilized while other transportation assets remain under-utilized. Over-utilization of a transportation asset may cause that asset to go out of service quicker, or require more maintenance, while under-utilization of a transportation asset may cause that asset to get require additional maintenance due to, for example, rusting caused by the asset sitting idle.

Improvements in selecting transportation assets is desired.

### BRIEF DESCRIPTION OF THE DRAWINGS

Embodiments of the present disclosure will now be described, by way of example only, with reference to the attached Figures.

FIG. 1 is a block diagram of an example system for selecting a transportation asset;

FIG. 2 is a flowchart illustrating a method for selecting a transportation asset in accordance with an embodiment of the present disclosure; and

FIG. 3 is a flowchart illustrating a method for selecting a transportation asset in accordance with another embodiment of the present disclosure.

### DETAILED DESCRIPTION

The present disclosure provides a system and method for selecting a transportation asset from among a plurality of transportation assets for use in transporting a shipment. According to the present disclosure, an asset rating value is determined for each of the transportation assets based on transport attribute data that is associated with each transportation asset. Based on the determined asset rating value, one of the transportation assets is automatically selected for use in transporting the shipment, or a list of recommended transportation assets is provided to a user. In the event that the user does not select one of the recommended transportation assets, the user is prompted for a reason why the recommendation was overridden, and the user's response may be utilized to revise future determinations of the asset rating values or rankings of the transportation assets.

In an embodiment, the present disclosure provides a method for selecting a transportation asset for use by a transportation asset management system that includes receiving an order for a shipment, receiving, for each of a plurality of transportation assets, asset attribute data, determining, for each of the plurality of transportation assets, an asset rating value based on the asset attribute data, and based on the determine asset rating values, automatically selecting one of the plurality of transportation assets for use in transporting the shipment.

In an embodiment, the asset attribute data for each of the plurality of transportation assets includes data associated with at least two attributes of the transportation asset, and determining the asset rating value based on the asset attribute data comprises weighting each attribute by a weighting factor.

In an embodiment, the asset attribute data for each of the plurality of transportation assets includes data associated with one or more attributes of the transportation asset, the one or more attributes includes one or more of: a time since the asset was last used, a mileage of the last shipment, a number of shipments in a define time period, a total mileage of the asset in a defined time period, a total mileage of the asset, an age of the asset, a time until a next scheduled maintenance, a type of the asset, a make or model of the asset, a location of the asset, and a state of the asset.

In an example embodiment, the method further includes, prior to determining the asset rating value, determining the weighting factors.

In an example embodiment, receiving the order for a shipment comprises receiving shipment attribute data associated with the shipment; wherein determining the weighting factors comprises determining the weighting factors based on the shipment attribute data.

In an example embodiment, the shipment attribute data includes at least one of: a type of goods in the shipment, a customer associated with the shipment, a distance of the shipment, a delivery date or time of the shipment, and a destination location of the shipment.

In an example embodiment, automatically selecting the one of the plurality of transportation assets for use in transporting the shipment comprises selecting the one of the plurality of assets having the highest determined rating value.

In an example embodiment, the method further includes transmitting the selected asset to the transportation asset management system for the ongoing tracking of the shipment.

In another embodiment, the present disclosure provides a system for selecting a transportation asset for use by a transportation asset management system that includes a memory storing asset attribute data for a plurality of transportation assets, a processor in communication with the memory and configured to receive an order for a shipment, receive from the memory the asset attribute data for each of the plurality of transportation assets, determine, for each of the plurality of transportation assets, an asset rating value based on the asset attribute data, and based on the determine asset rating values, automatically select one of the plurality of transportation assets for use in transporting the shipment.

In an embodiment, the asset attribute data stored in the memory for each of the plurality of transportation assets includes data associated with at least two attributes of the transportation asset, and determining the asset rating value based on the asset attribute data comprises weighting each attribute by a weighting factor.

In an embodiment, the asset attribute data stored in the memory for each of the plurality of transportation assets includes data associated with one or more attributes of the transportation asset, the one or more attributes includes one or more of: a time since the asset was last used, a mileage of the last shipment, a number of shipments in a define time period, a total mileage of the asset in a defined time period, a total mileage of the asset, an age of the asset, a time until a next scheduled maintenance, a type of the asset, a make or model of the asset, a location of the asset, and a state of the asset.

In an example embodiment, the processor is further configured to, prior to determining the asset rating value, determine the weighting factors.

In an example embodiment, receiving the order for a shipment comprises receiving shipment attribute data associated with the shipment; wherein determining the weighting factors comprises determining the weighting factors based on the shipment attribute data.

In an example embodiment, the shipment attribute data includes at least one of: a type of goods in the shipment, a customer associated with the shipment, a distance of the shipment, a delivery date or time of the shipment, and a destination location of the shipment.

In an example embodiment, automatically selecting the one of the plurality of transportation assets for use in transporting the shipment comprises selecting the one of the plurality of assets having the highest determined rating value.

In an example embodiment, the processor is further configured to transmit the selected asset to the transportation asset management system for the ongoing tracking of the shipment.

In another embodiment, the memory is a database of a transportation asset management system.

In another embodiment, the present disclosure provides a method for selecting a transportation asset for use by a transportation asset management system that includes receiving an order for a shipment, receiving, for each of a plurality of transportation assets, asset attribute data, determining, for each of the plurality of transportation assets, an asset rating value based on the asset attribute data utilizing a rating calculation, based on the determine asset rating values, determining one or more of the plurality of assets as recommended assets, receiving a selection of one of the plurality of assets for use in transporting the shipment, in response to determining that the selected one of the plurality of assets is not included in the recommended assets, prompting for a reason for selecting the selected one of the plurality of assets, and receiving a response to the prompt setting out the reason.

In an example embodiment, the method further includes revising at least one of the rating calculation utilized to determine the asset rating values and the asset attribute data based on the response.

In an example embodiment, the asset attribute data for each of the plurality of transportation assets includes data associated with at least two attributes of the transportation asset, the rating calculation includes a weighted calculation in which each attribute is weighted by a weighting factor, and revising the rating calculation includes revising the weighting factors of at least one attribute.

In an example embodiment, prompting for a reason comprises providing a predefined list of reasons, and receiving a response comprises receiving a selection of one of the reasons in the predefined list of reasons.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described.

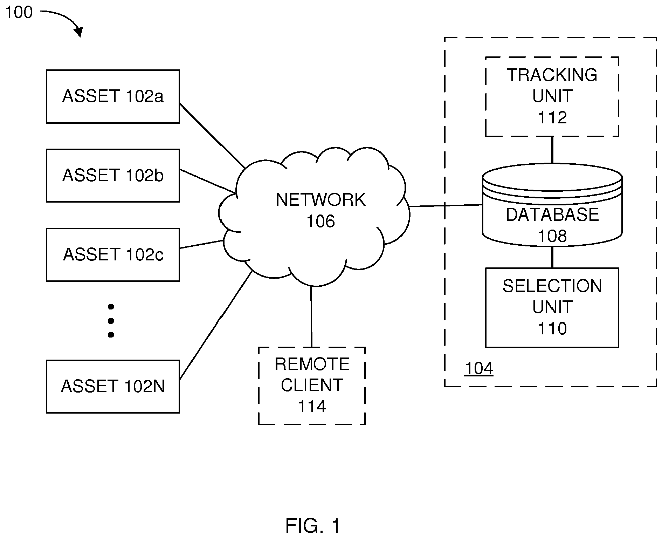

FIG. 1 is a schematic diagram of an example system 100 for selecting a transportation asset. The example system 100 includes a number of transportation assets 102a through 102N. Each of the transportation assets 102a-102N may be any type of transportation asset including, for example, shipping container, transport trailers, dump trucks, refrigerated containers or trucks, flatbed trucks, heavy equipment, heavy machines, heavy trucks, construction equipment, engineering equipment, and any other vehicle or the like.

In the example system 100 shown in FIG. 1, the transportation assets 102a-102N may include a node (not shown), which may be referred to herein as an asset tracking device. The tracking device may comprise a communication subsystem (not shown) to communicate with a transportation asset management system 104 via a network 106. The communication subsystems of the tracking devices may transmit information related to the assets 102a-102N including, for example, data collected from sensors (not shown) included within the transportation asset 102a-102N which may include, for example, an accelerometer, a light sensor, a sound sensor, a thermometer, one or more door sensors, a temper-detection sensor, a pressure sensor, a gas sensor, a fuel gauge, a pressure sensor such as, for example, a tire pressure monitoring sensor (TPMS), a motion sensor, a velocity sensor, a radio frequency identity (RFID) reader, a location sensor utilizing, for example, a global positioning system (GPS), and so forth.

The network 106 may be any suitable wired or wireless network, or combination of wired and wireless networks including, for example, a local area network (LAN), or a wide area network (WAN), or a combination thereof. Wireless communication between the communication subsystems of the transportation assets 102a-102N and the network 106, and between the transportation asset management system 104 and the network 106, may utilize any suitable short-range wireless communication protocol, such as, for example, Bluetooth®, IEEE 802.15.4, WiFi®, or Zigbee®, or any utilize any suitable cellular communication protocol including, for example, CDMA2000, 3GPP GERAN, 3GPP UTRAN, 3GPP E-UTRAN (LTE) or 3GPP 5G, or both short and long range wireless communication protocols.

The transportation asset management system 104 may include a database 108, an asset selection unit 110, and optionally an asset tracking unit 112.

The database 108 may be any suitable memory, and may store data associated with the transportation assets 102a-102N, which is referred to in this disclosure as asset attribution data. The asset attribution data may include data related to any attributes of the transportation assets 102a-102N.

For example, the asset attribute data stored in the database 108 in association with each transportation asset 102a-102N may include data related to one or more of a total mileage of the asset, an age of the asset, a type of the asset, a make or model of the asset, a location of the asset, a state of the asset such as, for example, damaged or due for maintenance, a time since the asset was last used, a mileage of the last shipment transported by the asset, a number of shipments transported by the asset in a defined time period, a total mileage of the asset in a defined time period, a time or mileage until a next scheduled maintenance, and any other suitable attribute.

The asset attribute data associated with a transportation asset 102a-102N that is stored in the database 108 may be updated as data is received from that transportation asset 102a-102N via the network 106. Data may be transmitted by the communication subsystems of the asset tracking devices of the transportation assets 102a-102N to the transportation asset management system 104 periodically on, for example, a defined schedule. In an example, some data may be transmitted more frequently whereas other data is transmitted less frequently. For example, location, temperature, and speed data may be transmitted more frequently than tire pressure and RFID sensor data.

The database 108 may also store data associated with orders for shipments, which is referred to in this disclosure as shipment attribute data. The shipment attribute data may include data related to one or more of a type of goods in the shipment, a customer associated with the shipment, a distance of the shipment, a delivery date or time, an origin location of the shipment, a destination location of the shipment, and any other suitable attribute of the shipment. In other examples, the shipment attribute data may be stored in a database (not shown) that is different from database 108.

The asset selection unit 110 may selects, for a given shipment, one or more assets 102a-102N for use in transporting that shipment, or may recommend one or more assets for use in transporting the shipment. As described in more detail below, the asset selection unit 110 may determine, for each of the plurality of assets 102a-102N, a rating based on the asset attribute data stored in the database 108. Based on the determined ratings, the asset selection unit 110 may automatically select one of the transportation assets 102a-102N for use in transporting the shipment, or may provide one or more of the assets 102a-102N as recommended assets from which a user may select a transportation asset 102a-102N for use in transporting the shipment.

The recommended assets may be provided by, for example, displaying the recommended assets on a display (not shown) of the transportation asset management system 104, and a user's selection of the transportation asset 102a-102N for use in transporting a shipment may be received via an input device (not shown) included in the transport asset management system 104.

The asset selection unit 110 may be provided by any suitable hardware, software, or combination of hardware and software. The asset selection unit 110 may be, for example, a plug-in that is added aftermarket to an existing transportation asset management system 104.

The optional asset tracking unit 112 may be configured to track and monitor the transportation assets 102a-102N including, for example, tracking the location of the transportation assets 102a-102N, or to monitor data received from the sensors included in the transportation assets 102a-102N. The optional asset tracking unit 112 may be configured to provide alerts if, for example, the location data indicates that the transportation asset 102a-102N is off course, or if the sensor data is outside of a predefined range such as, for example, the temperature within the transportation asset being above or below a desired temperature for the goods being shipped.

Optionally, the system 100 may include a remote client 114 that communicates with the transportation asset management system 104 via the network 106. The remote client 114 may be, for example, a server or any other electronic device. Examples of electronic devices include mobile, or handheld, wireless communication devices such as cellular phones, cellular smart-phones, wireless organizers, personal digital assistants, computers, tablet computers, mobile internet devices, electronic navigation devices, and so forth.

The remote client 114 may be utilized for any of, for example, remotely tracking and monitoring the transportation assets 102a-102N, reviewing the recommended assets provided by the asset selection unit 110, selecting one of the transportation assets 102a-102N, submitting orders for shipments, retrieving the information related to any of the transportation assets 102a-102N including asset current status, asset history, and shipment information. In another example, an alert generated by the optional asset tracking unit 112 may be received at the remote client 114. Although the example system 100 shown in FIG. 1 includes only one remote client 114 for illustrative purposes, in practice any number of remote clients may communicate with the asset selecting unit 110 and the transportation asset management system 104, generally, via the network 106.

Although in the example shown in FIG. 1, the database 108, the asset selection unit 110, and the optional asset tracking unit 112 of the transportation asset management system 104 are shown as separate components, in other examples two or more of the database 108, the asset selection unit 110, and the optional asset tracking unit 112 may be combined in a single component.

Further, although the example shown in FIG. 1 shows the database 108, the asset selection unit 110, and the optional asset tracking unit 112 as co-located, in other examples one or more of the database 108, the asset selection unit 110, and the optional asset tracking unit 112 may be located remotely from the other components.

In an alternative example, the asset selection unit 110 may be separate from the transportation asset management system 104 and may communicate with the transportation asset management system 104 via the network 106 to, for example, receive the asset attribute data stored in the database 108 and to transmit the selected transportation asset, or the recommended assets, to the transportation asset management system 104.

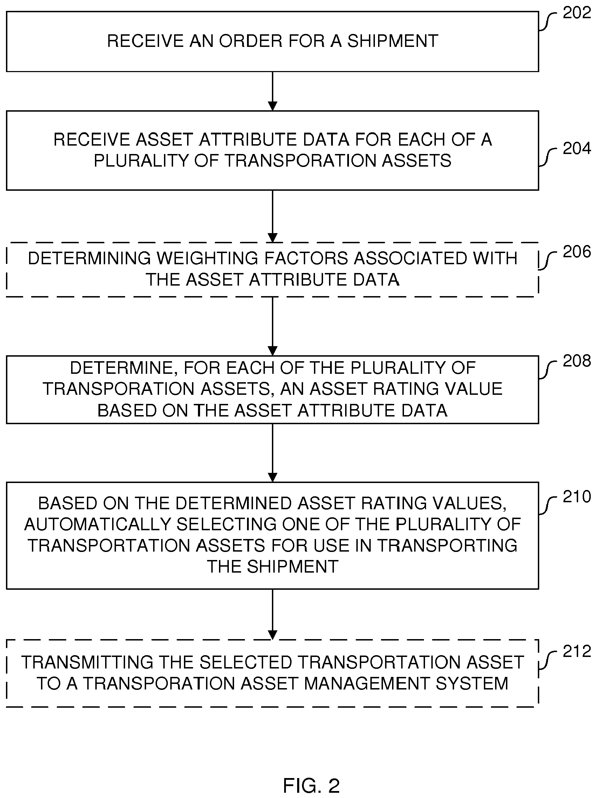

Referring now to FIG. 2, a flow chart illustrating an example method for automatically selecting a transportation asset for use by a transportation asset management system for transporting a shipment. In an example, the method may be carried about by a processor (not shown) included in the transportation asset management system 104 shown in FIG. 1. In another example, the method may be carried out by a processor of the asset selection unit 110 of the system 100 shown in FIG. 1 which, as described previously may be included in the transportation asset management system 104 or may be provided separate from the transportation asset management system 104. Coding of software for carrying out such a method is within the scope of a person of ordinary skill in the art given the present description. The method may contain additional or fewer processes than shown and/or described, and may be performed in a different order. Computer-readable code executable by at least one processor to perform the method may be stored in a computer-readable storage medium, such as a non-transitory computer-readable medium. The computer-readable code may be incorporated into an operating system or may be incorporated into a stand-alone application.

At 202, an order for a shipment is received. The order may be received at an asset selection unit of a transport asset management system, such as the asset selection unit 110 of the transportation asset management system 104 described above with reference to FIG. 1. The order may be received from a remote client, such as the remote client 114 in the system 100 described above with reference to FIG. 1, or may be input into the transportation asset management system via an input device. In cases in which the asset selection unit is separate from the transportation asset management system, receiving an order at 202 may include receiving the order at the asset selection unit from, for example, the transportation asset management system, from a remote client, or from an input device of the asset selection unit.

The order received at 202 may include shipment attribute data. The shipment attribute data may include any information related to the shipment such as, for example, any of a type of goods in the shipment, a customer associated with the shipment, a distance of the shipment, a delivery date or time, an origin location of the shipment, a destination location of the shipment, and any other suitable attribute of the shipment.

At 204, asset attribute data for each of a plurality of transportation assets is received. The asset attribute data received at 204 may be received at the asset selection unit from a database, such as database 108. As described above, some of the asset attribute data stored in the database may be data transmitted from the transportation assets to a transportation asset management system.

As described above, the asset attribute data may be may include data received from the transportation assets. The asset attribution data associated with a transportation asset may be any data relevant to that transportation asset including, for example, any of a total mileage of the asset, an age of the asset, a type of the asset, a make or model of the asset, a location of the asset, a state of the asset such as, for example, damaged or due for maintenance, a time since the asset was last used, a mileage of the last shipment transported by the asset, a number of shipments transported by the asset in a defined time period, a total mileage of the asset in a defined time period, and a time or mileage until a next scheduled maintenance.

In some cases, the asset attribute data may be converted into a numeric value. For example, a cost or time to retrieve the asset may be determined based on the current location of a transportation asset, or an operation cost may be determined based on the make or model of a transportation asset. The determined numeric values associated with the asset attribute data may then be utilized to determine the asset rating value described below.

Optionally at 206, weighting factors associated with the asset attribute data received at 204 may be determined. As is discussed in more detail below, the asset rating value that is calculated for each of the plurality of transportation assets may be a weighted calculation that utilizes asset attribute data related to two or more attributes of the transportation assets, in which case weighting factors may be determined. In an example, the weighting factors that are determined at 206 be different based on different criteria. For example, the weighting factors that are determined may be different for different shipment attribute data that may be received with the order for a shipment at 202. For example, certain types of transportation assets may be more desirable for transporting certain types of goods, and therefore the weighting applied to asset attribute data related to the asset type may be different for different types of goods included in an order. In another example, it may be desirable to use newer assets when transporting shipments for a particular customer, and therefore weighting factor for the age of the asset may be determined at 206 such that newer transportation are rated higher than older assets.

Weighting factors may be predetermined weighting factors. In an example, the predetermined weighting factors may include different sets of predetermined weighting factors for different criteria such as, for example, different shipment attribute data. The predetermined weighting factors may be determined based on, for example, historical or simulation data that is used to optimize the relative weightings of the different asset attribute data used to determine a rating value. In an example, optimization of the relative weightings may be performed utilizing machine learning algorithms.

At 208, an asset rating value is determined for each the plurality of transportation asset based on the asset attribute data received at 204. The asset rating value may be determined based on asset attribute data associated with one attribute of the transportation asset, or multiple attributes of the transportation asset. In an example, the asset rating value is determined by performing a weighted calculation of asset attribute data related to two or more attributes of the transportation assets. In an example, the weighted calculation may also be based on the shipment attribute data. In the weighted calculation, the asset attribute data related to each attribute utilized for determining the asset rating value is multiplied by a corresponding weighting factor that is determined at 206.

In an example, the determination at 208 may include determining a value that is associated with each attribute. For example, the asset attribute data related to a particular attribute may be scaled for all of the plurality of transportation assets. For example, the value of the asset attribute data may be scaled to a value between zero and one, as described in more detail below. Scaling the asset attribute data in this way may inhibit the asset attribute data related to one attribute of the transportation assets disproportionately affecting the determined asset rating value. For example, mileage travelled may increase by thousands of kilometers during a trip, whereas the number of trips increases by 1, and therefore the attribute related to mileage would have a greater effect on the asset's rating value than number of trips when calculating a next asset rating value. Therefore, scaling the asset attribute data inhibits data range bias from affecting the determined asset rating value in this way.

In other examples, other equations or statistical methods utilizing the asset attribute data may be utilized to determine the asset rating value at 208.

The determination at 208 may include filtering out the plurality of transportation assets based on criteria. The criteria utilized to filter the plurality of transportation assets may be shipment attribute data associated received with an order for a shipment at 202. For example, if the shipment attribute data indicates that the goods for the shipment are frozen goods, then transportation assets may be filtered by type to exclude transportation assets that do not include refrigeration. In another example, the amount of goods included in the order may be utilized to filter out transportation assets that are not sufficiently sized to transport the shipment. In another example, the distance between the original and the destination of the shipment may be utilized to filter out transportation assets that are not suitable for travelling that distance due to, for example, the transportation asset being due for maintenance before the distance of the shipment.

In another example, the plurality of transportation assets may be filtered based on the weather forecast. For example, if the weather forecast is for severe rain on the route for the shipment, the plurality of transportation assets may be filtered to exclude transportation assets that are not enclosed, or that leak, or that are otherwise not suitable for the weather being forecasted. In another example, the plurality of assets may be filtered based on the asset attribute data received at 204. For example, the status of the transportation assets may be utilized to filter out transportation assets that are damaged, or have mileage within a previous time duration that exceeds a threshold mileage.

In an example, filtering may be performed by setting the asset rating value for transportation assets to be excluded to the lowest possible value such as, for example, zero, or less than the lowest possible value such as, for example, negative one.

At 210, one of the plurality of transportation assets is automatically selected based on the asset rating values determined at 208. Automatically selecting at 210 means that, for example, one of the plurality of transportation assets is selected without input or intervention by a user. In an example, the selected transportation asset is the transportation asset having the highest asset rating value. The transportation asset selected at 210 may be the transportation asset having the highest determined asset rating value, or alternatively may be the transportation asset having the lowest determined asset rating value.

Optionally, when the device that performs the method set out in FIG. 2 is separate from the transportation asset management system, the selected transportation asset is transmitted to the transportation asset management system at 212. The transportation asset management system may then assign the selected transportation asset for use in transporting the shipment, or to track the selected transportation asset in order to track the shipment, or both.

With continued reference to FIGS. 1 and 2, an illustrative example of determining asset rating values in accordance with the above described method. In the example, asset rating values are determined for three transportation assets. The asset rating values are determined by a weighted calculation utilizing asset attribute data related to two attributes of the transportation assets: the number of shipments transported by the transportation asset in the previous month; and the mileage accumulated by the transportation asset in the previous month. The present simple example relates to three transportation assets and utilizes asset attribute data related to two attributes to determine the asset rating values in order to illustrate an example of how such determination may be made. However, in practice it will be appreciated that asset rating values may be determined for many more than three transportation assets and the determination of the asset rating values may be based on asset attribute data relating to many more than two attributes.

In the present example, the asset attribute data that is received, for example at 204 of the above described method, is set forth in the following table:

| Asset number (m) | Shipments in last month (f(1,m)) | Total mileage in last month (f(2,m)) |
|---|---|---|
| Asset 1 | 10 | 20,000 km |
| Asset 2 | 20 | 30,000 km |
| Asset 3 | 30 | 10,000 km |

In the present example, the asset attribute data associated with each attribute is designed as attribute value $f(n,m)$, where n designates the attribute, and m designates the transportation asset. In the above table, n=1 designates the number of shipments in the last month, and n=2 designates the total mileage in the last month.

As disclosed previously, the three transportation assets may be a subset of the total number of transportation assets. The subset of three transportation assets may be determined by filtering the total number of transportation assets based on one or more criteria such as, for example, shipment attribute data or other factors such as, for example, the weather forecast.

In the present example, the attribute values $f(n,m)$ are scaled to provide a scaled value $F(n.m)$ that is between zero and one, as described. In the present example, this scaling is performed utilizing a mapping equation:

$$F(n,m) = ( f(n,m) - max )/( min - max ).$$

In the present example, the weighting factors, $W(n)$, determined, at for example 206 in the above described method, for each of the attribute values $f(n.m)$ are: $W(1)=0.25$; $W(2)=0.75$. In this example, the total mileage in the previous month ($f(2,m)$) is weighed three times more than the number of shipments in the previous month ($f(1,m)$). In the present example, the weighting factors as linear weighting factors such that the asset rating values, $R(m)$, are determined by the following equation:

$$R(m) = W(1)*F(1,m) + W(2)*F(2,m).$$

Although the weighting factors in the present example are linear, in other examples the weighting factors may be other than linear such as, for example, exponential weighting factors.

Therefore, the scaled asset values $F(n,m)$ and the determined asset rating values $R(m)$ for the present example are as follows:

| Asset (m) | F(1,m) | F(2,m) | R(m) |
|-----------|--------|--------|------|
| Asset 1 | 1 | 0.5 | (0.25)(1) + (0.75)(0.5) = 0.625 |
| Asset 2 | 0.5 | 0 | (0.25)(0.5) + (0.75)(0) = 0.125 |
| Asset 3 | 0 | 1 | (0.25)(0) + (0.75)(1) = 0.75 |

In the present example, asset 3 is automatically selected, at for example 210 of the above described method, for use in transporting the shipment because asset 3 has the highest asset rating value is determined. In the event that the determination of the asset rating values is performed by an asset selection unit that is separate from a transportation asset management system, then the selected transportation asset may be transmitted to the transportation asset management system by the asset selection unit.

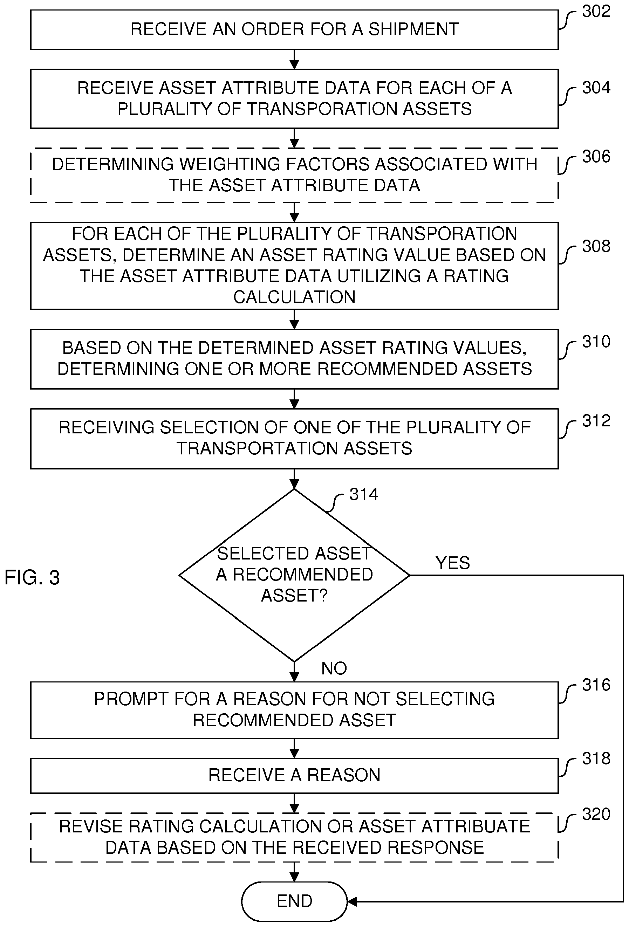

Referring now to FIG. 3, a flow chart illustrating another example method for selecting a transportation asset for use in transporting a shipment. In an example, the method may be carried about by a processor (not shown) included in the transportation asset management system 104 shown in FIG. 1. In another example, the method may be carried out by a processor of the asset selection unit 110 of the system 100 shown in FIG. 1 which, as described previously may be included in the transportation asset management system 104 or may be provided separate from the transportation asset management system 104. Coding of software for carrying out such a method is within the scope of a person of ordinary skill in the art given the present description. The method may contain additional or fewer processes than shown and/or described, and may be performed in a different order. Computer-readable code executable by at least one processor to perform the method may be stored in a computer-readable storage medium, such as a non-transitory computer-readable medium. The computer-readable code may be incorporated into an operating system or may be incorporated into a stand-alone application.

At 302 an order for a shipment is received. At 304, asset attribute data is received for a plurality of transportation assets. Optionally at 306, weighting factors associated with the asset attribute data are determined. At 308, an asset rating value is determined for each of the plurality of the transportation assets based on the asset attribution data utilizing a rating calculation. Steps 302 through 308 are substantially similar to steps 202 through 208, respectively, of the method described with reference to FIG. 2 and therefore these steps 302 through 308 are not further described here to avoid repetition.

At 310, one or more of the plurality of transportation assets are determined to be recommended assets. The recommended assets may be determined as a predetermined number of transportation assets having the highest asset rating values, or alternatively having the lowest asset rating values, depending on how the asset rating values are determined at 308. The recommended assets may be presented to a user by, for example, displaying the recommended assets on a display of the transportation asset management system, or the asset selection unit, or a remote client in communication with the transportation asset management system or the asset selection unit.

At 312, a selection of one of the plurality of transportation assets is received. The selection may be received from, for example, an input device connected to the transportation asset management system, or the asset selection unit, or a remote client in communication with the transportation asset management system or the asset selection unit.

At 314, a determination of whether the selected one of the plurality of transportation asset is a recommended asset determined at 310. If the determination at 314 is yes, then the process ends. If the determination at 314 is no, the process continues to 316.

At 316, a reason for not selecting a recommended asset is prompted for. The prompt at 316 may be any suitable prompt including, for example, displaying a prompt on a display such as, for example, the display utilized to display the recommended assets. The prompt may include, for example, a predefined list of reasons. The predefined list may include the reasons of, for example: severe weather, for example after a winter storm, some transportation assets may not accessible until snow is removed, or some transportation assets may be more difficult to operate in severe rain, for example; recommended assets are not compatible with truck to be used for shipment; recommended asset is damaged, broken, or not functional; recommended asset is not accessible, for example another asset may be blocking the recommended asset; recommended asset could not be located, or was stolen; recommended asset is more difficult to operate than selected asset; recommended asset has higher operational cost than selected asset.

At 318, a reason is received. The reason may be received via an input device, such as for example the input device that provided the selection at 312. Receiving the selection at 318 may include receiving a selection of one of the reasons in the predetermined list of reasons that may be included in the prompt at 316. The responses may be utilized by an organization when making decisions of what types of assets to purchase in the future.

Optionally, at 320, one or both of the rating calculation and the asset attribute data are revised based on the response. For example, if the received response is that the recommended assets are more difficult to operate or has higher operational cost than the selected asset, then the rating calculation may be revised to rate assets of the type of the recommended assets lower, or rate transportation assets of the type of the selected asset higher, or both. This revision to the rating calculation may be performed by, for example, revising the weighting factor associated with the asset type attribute. By revising the rating calculation based on the received response, the rating calculation may be improved for future selection of recommended assets.

In an example, after revising rating calculation at 320 is performed, monitoring of future selections of transportation assets is performed. If, for example, the monitoring indicates that the instances of selection of transportation assets that are not recommended assets are reduced as a result of the revising at 320, then the revised rating calculation is retained. However, if the monitoring indicates that the instances of selection of transportation assets that are not recommended assets is unchanged, or increases, then the revisions performed at 320 may be reversed.

In another example, if the received response is that the recommended assets are damaged, cannot be located, or is inaccessible, then the asset attribute data for the recommended assets such that the status of the asset is changed to damaged or unavailable.

According to another example, a method for selecting a transportation asset for use by a transportation asset management system comprises: receiving an order for a shipment; receiving, for each of a plurality of transportation assets, asset attribute data; determining, for each of the plurality of transportation assets, an asset rating value based on the asset attribute data utilizing a rating calculation; based on the determine asset rating values, determining one or more of the plurality of assets as recommended assets; receiving a selection of one of the plurality of assets for use in transporting the shipment; in response to determining that the selected one of the plurality of assets is not included in the recommended assets, prompting for a reason for selecting the selected one of the plurality of assets; and receiving a response to the prompt setting out the reason.

The method may further comprise revising at least one of the rating calculation utilized to determine the asset rating values and the asset attribute data based on the response.

In the method, the asset attribute data for each of the plurality of transportation assets may optionally include data associated with at least two attributes of the transportation asset. The rating calculation may comprise a weighted calculation in which each attribute is weighted by a weighting factor. Revising the rating calculation may comprise revising the weighting factors of at least one attribute.

In the method, prompting for a reason may optionally comprise providing a predefined list of reasons, and receiving a response comprises receiving a selection of one of the reasons in the predefined list of reasons.

Embodiments of the present disclosure provide selecting a transportation asset for use in transporting a shipment. The present disclosure facilitates utilizing transportation assets in a way that may reduce the maintenance required for the transportation asset by inhibit the over-use of some assets, and the under-use of other assets. The present invention may inhibit the problems caused by dispatchers who prefer, consciously or unconsciously, certain transportation assets. Further, by prompting for a response why a recommended asset is not selected, the present disclosure improve the calculation of asset rating values such that better asset recommendations or selections may be made. Further, feedback received from received responses why a recommended asset is not selected may inform future decisions regarding what type of transportation assets to purchase.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

**Claims**

1. A method for selecting a transportation asset for use by a transportation asset management system, the method comprising:

   receiving an order for a shipment;
   receiving, for each of a plurality of transportation assets, asset attribute data;
   determining, for each of the plurality of transportation assets, an asset rating value based on the asset attribute data; and
   based on the determine asset rating values, automatically selecting one of the plurality of transportation assets for use in transporting the shipment.

2. The method according to claim 1, wherein:

   the asset attribute data for each of the plurality of transportation assets includes data associated with at least two attributes of the transportation asset; and
   determining the asset rating value based on the asset attribute data comprises weighting each attribute by a weighting factor.

3. The method according to claim 1 or 2, wherein the asset attribute data for each of the plurality of transportation assets includes data associated with one or more attributes of the transportation asset, the one or more attributes comprising one or more of:

   a time since the asset was last used;
   a mileage of the last shipment;
   a number of shipments in a define time period;
   a total mileage of the asset in a defined time period;
   a total mileage of the asset;
   an age of the asset;
   a time until a next scheduled maintenance;
   a type of the asset;
   a make or model of the asset;
   a location of the asset; and
   a state of the asset.

4. The method according to claim 2, further comprising, prior to determining the asset rating value, determining the weighting factors.

5. The method according to claim 4, wherein receiving the order for a shipment comprises receiving shipment attribute data associated with the shipment; wherein determining the weighting factors comprises determining the weighting factors based on the shipment attribute data.

6. The method according to claim 5, wherein the shipment attribute data comprises at least one of:

   a type of goods in the shipment;
   a customer associated with the shipment;
   a distance of the shipment;
   a delivery date or time of the shipment; and
   a destination location of the shipment.

7. The method according to any previous claim, wherein automatically selecting the one of the plurality of transportation assets for use in transporting the shipment comprises selecting the one of the plurality of assets having the highest determined rating value.

8. The method according to any previous claim, further comprising transmitting the selected asset to the transportation asset management system for the ongoing tracking of the shipment.

9. A system for selecting a transportation asset for use by a transportation asset management system, the system comprising:

a memory storing asset attribute data for a plurality of transportation assets;
a processor in communication with the memory and configured to:

receive an order for a shipment;
receive from the memory the asset attribute data for each of the plurality of transportation assets;
determine, for each of the plurality of transportation assets, an asset rating value based on the asset attribute data; and
based on the determine asset rating values, automatically select one of the plurality of transportation assets for use in transporting the shipment.

10. The system according to claim 9, wherein:

the asset attribute data stored in the memory for each of the plurality of transportation assets includes data associated with at least two attributes of the transportation asset; and
determining the asset rating value based on the asset attribute data comprises weighting each attribute by a weighting factor.

11. The system according to claim 9, wherein the asset attribute data stored in the memory for each of the plurality of transportation assets includes data associated with one or more attributes of the transportation asset, the one or more attributes comprising one or more of:

a time since the asset was last used;
a mileage of the last shipment;
a number of shipments in a define time period;
a total mileage of the asset in a defined time period;
a total mileage of the asset;
an age of the asset;
a time until a next scheduled maintenance;
a type of the asset;
a make or model of the asset;
a location of the asset; and
a state of the asset.

12. The system according to claim 9, wherein automatically selecting the one of the plurality of transportation assets for use in transporting the shipment comprises selecting the one of the plurality of assets having the highest determined rating value.

13. The system according to claim 9, wherein the processor is further configured to transmit the selected asset to the transportation asset management system for the ongoing tracking of the shipment.

14. The system according to claim 9, wherein the memory is a database of the transportation asset management system.

15. A method for selecting a transportation asset for use by a transportation asset management system, the method comprising:

receiving an order for a shipment;
receiving, for each of a plurality of transportation assets, asset attribute data;
determining, for each of the plurality of transportation assets, an asset rating value based on the asset attribute data utilizing a rating calculation;
based on the determine asset rating values, determining one or more of the plurality of assets as recommended assets;
receiving a selection of one of the plurality of assets for use in transporting the shipment;
in response to determining that the selected one of the plurality of assets is not included in the recommended assets, prompting for a reason for selecting the selected one of the plurality of assets; and
receiving a response to the prompt setting out the reason.

100

ASSET 102a

ASSET 102b

ASSET 102c

ASSET 102N

NETWORK
106

REMOTE
CLIENT
114

TRACKING
UNIT
112

DATABASE
108

SELECTION
UNIT
110

104

FIG. 1

RECEIVE AN ORDER FOR A SHIPMENT —202

RECEIVE ASSET ATTRIBUTE DATA FOR EACH OF A PLURALITY OF TRANSPORATION ASSETS —204

DETERMINING WEIGHTING FACTORS ASSOCIATED WITH THE ASSET ATTRIBUTE DATA —206

DETERMINE, FOR EACH OF THE PLURALITY OF TRANSPORATION ASSETS, AN ASSET RATING VALUE BASED ON THE ASSET ATTRIBUTE DATA —208

BASED ON THE DETERMINED ASSET RATING VALUES, AUTOMATICALLY SELECTING ONE OF THE PLURALITY OF TRANSPORTATION ASSETS FOR USE IN TRANSPORTING THE SHIPMENT —210

TRANSMITTING THE SELECTED TRANSPORTATION ASSET TO A TRANSPORATION ASSET MANAGEMENT SYSTEM —212

FIG. 2

RECEIVE AN ORDER FOR A SHIPMENT 302

RECEIVE ASSET ATTRIBUTE DATA FOR EACH OF A PLURALITY OF TRANSPORATION ASSETS 304

DETERMINING WEIGHTING FACTORS ASSOCIATED WITH THE ASSET ATTRIBUTE DATA 306

FOR EACH OF THE PLURALITY OF TRANSPORATION ASSETS, DETERMINE AN ASSET RATING VALUE BASED ON THE ASSET ATTRIBUTE DATA UTILIZING A RATING CALCULATION 308

BASED ON THE DETERMINED ASSET RATING VALUES, DETERMINING ONE OR MORE RECOMMENDED ASSETS 310

RECEIVING SELECTION OF ONE OF THE PLURALITY OF TRANSPORTATION ASSETS 312

FIG. 3

SELECTED ASSET A RECOMMENDED ASSET? 314

YES

NO

PROMPT FOR A REASON FOR NOT SELECTING RECOMMENDED ASSET 316

RECEIVE A REASON 318

REVISE RATING CALCULATION OR ASSET ATTRIBUATE DATA BASED ON THE RECEIVED RESPONSE 320

END

Europäisches
Patentamt

European
Patent Office

Office européen
des brevets

# EUROPEAN SEARCH REPORT

Application Number

EP 19 19 2654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/094084 A1 (REMPEL ERIC [US] ET AL) 9 April 2009 (2009-04-09) * figures 2, 5 * * paragraph [0017] - paragraph [0019] * * paragraph [0036] * ----- | 1-15 | INV. G06Q10/08 |
| X | US 2010/250461 A1 (ARNOLD WILLIAM CRAIG [US] ET AL) 30 September 2010 (2010-09-30) * abstract; figures 2, 3 * * paragraph [0075] - paragraph [0079] * ----- | 1-15 | |
| X | US 2005/278063 A1 (HERSH RICHARD [US] ET AL) 15 December 2005 (2005-12-15) * abstract; figures 6,7 * * paragraph [0086] - paragraph [0087] * ----- | 1-15 | |

TECHNICAL FIELDS
SEARCHED     (IPC)

G06Q

The present search report has been drawn up for all claims

| Place of search | Date of completion of the search | Examiner |
|---|---|---|
| Munich | 19 December 2019 | Peller, Ingrid |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 2654

This annex lists the patent family members relating to the patent documents cited in  the above-mentioned European search report.
The members are as contained in the European Patent Office EDP file on
The European Patent Office is in no way liable for these particulars which are merely given for the purpose of information.

19-12-2019

| Patent document cited in search report | | Publication date | Patent family member(s) | | Publication date |
|---|---|---|---|---|---|
| US 2009094084 | A1 | 09-04-2009 | US | 2009094084 A1 | 09-04-2009 |
|  |  |  | WO | 2009046410 A2 | 09-04-2009 |
| US 2010250461 | A1 | 30-09-2010 | NONE | | |
| US 2005278063 | A1 | 15-12-2005 | US | 2005278063 A1 | 15-12-2005 |
|  |  |  | US | 2008294491 A1 | 27-11-2008 |
|  |  |  | US | 2009030770 A1 | 29-01-2009 |

EPO FORM P0459

For more details about this annex : see Official Journal of the European Patent Office, No. 12/82